# EUROPEAN PATENT APPLICATION

(11) **EP 4 706 403 A1**
(43) Date of publication of application: **11.03.2026**
(21) Application number: 23936188.4
(22) Date of filing: 12.05.2023
(51) Int. Cl.: A23L 2/02, C12P 19/18, C12P 19/04

(54) **LOW-SUGAR FRUIT AND VEGETABLE JUICE, LOW-SUGAR ORANGE JUICE, AND METHOD FOR REDUCING SUGAR CONTENT IN SUGAR-CONTAINING BEVERAGE**

(30) Priority: 05.05.2023 CN 202310497457
(71) Applicant: Shanghai Yijin Biotechnology Co., Ltd, Shanghai 200241 (CN)
(72) Inventor: WU, Yan, Shanghai 200241 (CN); XING, Litong, Shanghai 200241 (CN); TIAN, Zhenhua, Shanghai 200241 (CN); WANG, Shu, Shanghai 200241 (CN)
(74) Representative: Michalski Hüttermann & Partner Patentanwälte mbB
(86) International application number: PCT/CN2023/094018
(87) International publication number: WO 2024/229875

(57) **Abstract**

Provided are a method for reducing sugar content in a sugar-containing beverage and a product prepared by same. The method comprises: contacting a sugar-containing beverage with an immobilized fructosyltransferase for reaction. The immobilized fructosyltransferase has the activity of reducing the sugar content in a sugar-containing beverage and converting sucrose into fructooligosaccharides, thereby giving a beverage having a reduced sugar content and an increased content of fructooligosaccharides compared with the sugar-containing beverage. The acquired low-sugar beverage comprises fructose, glucose, sucrose, and a dietary fiber. The dietary fiber is preferably a fructooligosaccharide. The fructooligosaccharide is preferably a ketose and/or a nystose.

## Description

The present application claims the priority of Chinese patent application No.2023104974577 filed on May 5, 2023. The contents of the Chinese patent application are incorporated herein by reference in their entireties.

### TECHNICAL FIELD

The present disclosure relates to the field of biotechnology, specifically to a low-sugar fruit and vegetable juice, a low-sugar orange juice, and a method for reducing sugar content in sugar-containing beverage.

### BACKGROUND

Fruit and vegetable juice is the natural liquid derived from fruits and vegetables, extracted through mechanical extrusion or soaking of the fruits and vegetables. It is usually consumed as a beverage or used as an ingredient or flavoring in food. In addition to its unique flavor, fruit and vegetable juice also contains a lot of functional ingredients such as vitamins, minerals, nutritional fiber, etc., which is widely welcomed by the public. However, fruit juice presents a high content of sugar, and the sugar found in natural fruit juice usually includes sucrose, fructose and glucose. The main problem associated with high sugar intake is obesity, which is linked to major public health issues, including diabetes and malnutrition. Therefore, in recent years, influenced by the growing awareness of healthy diet, the fruit juice market has gradually developed towards low-calorie and low-sugar options.

Currently, low-sugar fruit juice products on the market are usually a mixture of fruit juice and other beverage (i.e. coconut water), or fruit juice diluted with water and typically mixed with low-calorie sweeteners, and therefore do not possess the same sensory and nutritional properties as natural fruit juice.

Physical methods such as using ultrafiltration membranes and resins are also employed to reduce sugar content in fruit juice. As disclosed in patent CN111491521A, a method for producing a sugar reduced fruit juice, separation methods (nanofiltration and diafiltration) are used to achieve sugar removal, wherein the sugar content is reduced by up to 75%. These processes negatively affect the sensory and nutritional properties of the treated juice, and some equipment is expensive and costly.

On the other hand, fructosyltransferase (FTase) is used to convert sucrose in fruit juice into fructooligosaccharide to achieve the purpose of reducing sugar in fruit juice. Fructooligosaccharide, also known as fructo-oligosaccharide (FOS), is composed of 1-3 fructosyl groups combined with fructosyl groups in sucrose through β-(1,2)- glycosidic bonds to generate macromolecular carbohydrates such as kestose and nystose. Fructooligosaccharide has dietary fiber-like properties, can't be digested and absorbed by human body, which can greatly reduce their calories, and has the effect of promoting the proliferation of beneficial microorganisms such as lactic acid bacteria and bifidobacteria in digestive system, and preventing tooth decay.

As described in patent CN107404909A, a fructosyltransferase crude enzyme solution derived from *Aspergillus niger* 1AM2020 is used to reduce the disaccharide content in concentrated fruit juice. Although this enzyme can maintain good turbidity in fruit juice and vegetable juice, its degradation of disaccharides is not thorough, and using a crude enzyme solution derived from *Aspergillus niger* not only adds additional steps for enzyme inactivation in juice preparation but also affects the taste of the juice to some extent. Therefore, it is very necessary to develop a low-cost, efficient sugar reduction method that does not affect the quality of the juice.

### CONTENT OF THE PRESENT INVENTION

In order to effectively reduce the sugar content in sugar-containing beverage while maintaining their original flavor, taste, and nutritional components, the present disclosure provides a method for reducing the sugar content in sugar-containing beverage and a low-sugar beverage. The sugar reduction method of the present invention uses immobilized fructosyltransferase to effectively reduce the sucrose content in sugar-containing beverage while maintaining the flavor and nutritional value of the beverage; at the same time, it effectively improves the enzyme's utilization efficiency and the number of repeated uses, significantly reducing the cost of the sugar reduction process in sugar-containing beverage, and is conducive to large-scale industrial application.

In order to solve the above technical problems, the first aspect of the present disclosure provides a low-sugar fruit and vegetable juice, comprising: fructose, glucose, sucrose and a dietary fiber.

In the present disclosure, the dietary fiber can be a fructooligosaccharide; and the fructooligosaccharide can be preferably kestose and/or nystose.

In the present disclosure, preferably, the content of fructose is 15-25 g/L, the content of glucose is 20-35 g/L, the content of sucrose is 0-6 g/L, and the content of fructooligosaccharide is 15-25 g/L; more preferably, the content of fructose is 15-25 g/L, the content of glucose is 20-35 g/L, the content of sucrose is 0-2 g/L, and the content of fructooligosaccharide is 19-22 g/L.

In some preferred embodiments of the present disclosure, the content of fructose is 16.26-21.52 g/L, the content of glucose is 21.47-26.37 g/L, the content of sucrose is 0.67-5.66 g/L, the content of kestose is 15.12-17.57 g/L, and the content of nystose is 1.52-3.25 g/L; more preferably, the content of fructose is from 16.26 to 21.87 g/L, the content of glucose is from 22.86 to 26.37 g/L, the content of sucrose is from 0.67 to 2.45 g/L, the content of kestose is from 17.09 to 17.57 g/L and the content of nystose is from 2.91 to 3.25 g/L.

In the present disclosure, preferably, the content of fructose is 20%-40% of the total sugar content, the content of glucose is 30%-45% of the total sugar content, the content of sucrose is 0-10% of the total sugar content, and the content of fructooligosaccharide is 20%-40% of the total sugar content; more preferably, the content of fructose is 20%-40% of the total sugar content, the content of glucose is 35%-45% of the total sugar content, the content of sucrose is 0-2% of the total sugar content, and the content of fructooligosaccharide is 25%-40% of the total sugar content; wherein the total amount of fructose, glucose, sucrose and fructooligosaccharide is considered as 100%.

In some preferred embodiments of the present disclosure, the content of fructose is 25.82%-34.13% of the total sugar content, the content of glucose is 34.05%-41.88% of the total sugar content, the content of sucrose is 1.04%-7.86% of the total sugar content, and the content of fructooligosaccharide is 24.46%-28.62% of the total sugar content. More preferably, the content of fructose is 25.82% to 32.72% of the total sugar content, the content of glucose is 34.77% to 41.88% of the total sugar content, the content of sucrose is 1.04% to 3.35% of the total sugar content, and the content of fructooligosaccharide is 27.37% to 31.39% of the total sugar content; wherein the total amount of fructose, glucose, sucrose and fructooligosaccharide is considered as 100%.

In some preferred embodiments of the present disclosure, the content of fructose is 25.82%-34.13% of the total sugar content, the content of glucose is 34.05%-41.88% of the total sugar content, the content of sucrose is 1.04%-7.86% of the total sugar content, the content of kestose is 20.57%-26.72% of the total sugar content, and the content of nystose is 2.38%-4.88% of the total sugar content. More preferably, the content of fructose is 25.82%-32.72% of the total sugar content, the content of glucose is 34.77%-41.88% of the total sugar content, the content of sucrose is 1.04%-3.35% of the total sugar content, the content of kestose is 23.14%-26.72% of the total sugar content, and the content of nystose is 3.97%-4.88% of the total sugar content; wherein the total amount of fructose, glucose, sucrose, kestose and nystose is considered as 100%.

In the present disclosure, preferably, the low-sugar fruit and vegetable juice is prepared from pure fruit juice, such as apple juice, pear juice, peach juice, mango juice or grape juice.

The second aspect of the disclosure provides a low-sugar orange juice, comprising: fructose, glucose, sucrose and a dietary fiber.

In the present disclosure, the dietary fiber can be a fructooligosaccharide; and the fructooligosaccharide can be preferably kestose and/or nystose.

In the present disclosure, preferably, the content of fructose is 15-25 g/L, the content of glucose is 20-35 g/L, the content of sucrose is 0-6 g/L, and the content of fructooligosaccharide is 15-25 g/L; more preferably, the content of fructose is 15-25 g/L, the content of glucose is 20-35 g/L, the content of sucrose is 0-2 g/L, and the content of fructooligosaccharide is 19-22 g/L.

In some preferred embodiments of the present disclosure, the content of fructose is 16.26-21.52 g/L, the content of glucose is 21.47-26.37 g/L, the content of sucrose is 0.67-5.66 g/L, and the content of fructooligosaccharide is 15.97-21.36 g/L. More preferably, the content of fructose is 16.26-21.87 g/L, the content of glucose is 22.86-26.37 g/L, the content of sucrose is 0.67-2.45 g/L, and the content of fructooligosaccharide is 19.56-21.36g/L.

In some preferred embodiments of the present disclosure, the content of fructose is 16.26-21.52 g/L, the content of glucose is 21.47-26.37 g/L, the content of sucrose is 0.67-5.66 g/L, the content of kestose is 15.12-17.57 g/L, and the content of nystose is 1.52-3.25 g/L. More preferably, the content of fructose is from 16.26 to 21.87 g/L, the content of glucose is from 22.86 to 26.37 g/L, the content of sucrose is from 0.67 to 2.45 g/L, the content of kestose is from 17.09 to 17.57 g/L and the content of nystose is from 2.91 to 3.25 g/L.

In the present disclosure, preferably, the content of fructose is 20%-40% of the total sugar content, the content of glucose is 30%-45% of the total sugar content, the content of sucrose is 0-10% of the total sugar content, and the content of fructooligosaccharide is 20%-40% of the total sugar content; more preferably, the content of fructose is 20%-40% of the total sugar content, the content of glucose is 35%-45% of the total sugar content, the content of sucrose is 0-2% of the total sugar content, and the content of fructooligosaccharide is 25%-40% of the total sugar content; wherein the total amount of fructose, glucose, sucrose and fructooligosaccharide is considered as 100%.

In some preferred embodiments of the present disclosure, the content of fructose is 25.82%-34.13% of the total sugar content, the content of glucose is 34.05%-41.88% of the total sugar content, the content of sucrose is 1.04%-7.86% of the total sugar content, and the content of fructooligosaccharide is 24.46%-28.62% of the total sugar content. More preferably, the content of fructose is 25.82% to 32.72% of the total sugar content, the content of glucose is 34.77% to 41.88% of the total sugar content, the content of sucrose is 1.04% to 3.35% of the total sugar content, and the content of fructooligosaccharide is 27.37% to 31.39% of the total sugar content; wherein the total amount of fructose, glucose, sucrose and fructooligosaccharide is considered as 100%.

In some preferred embodiments of the present disclosure, the content of fructose is 25.82%-34.13% of the total sugar content, the content of glucose is 34.05%-41.88% of the total sugar content, the content of sucrose is 1.04%-7.86% of the total sugar content, the content of kestose is 20.57%-26.72% of the total sugar content, and the content of nystose is 2.38%-4.88% of the total sugar content. More preferably, the content of fructose is 25.82%-32.72% of the total sugar content, the content of glucose is 34.77%-41.88% of the total sugar content, the content of sucrose is 1.04%-3.35% of the total sugar content, the content of kestose is 23.14%-26.72% of the total sugar content, and the content of nystose is 3.97%-4.88% of the total sugar content; wherein the total amount of fructose, glucose, sucrose, kestose and nystose is considered as 100%.

In the present disclosure, preferably, the low-sugar orange juice is prepared from pure orange juice.

The third aspect of the present disclosure provides a method for reducing sugar content in a sugar-containing beverage, comprising: contacting the sugar-containing beverage with an immobilized fructosyltransferase for reaction; wherein the immobilized fructosyltransferase has the activity of reducing the sugar content in a sugar-containing beverage and converting sucrose into fructooligosaccharide, thereby giving a beverage having a reduced sugar content and an increased content of fructooligosaccharide compared with the sugar-containing beverage.

In the present disclosure, the reduced sugar content refers to the sugar content after the reaction being lower than that before the reaction in the usual sense; the increased content of fructooligosaccharide refers to the content of fructooligosaccharide after the reaction being higher than that before the reaction in the usual sense.

In the present disclosure, preferably, the sucrose content of the sugar-containing beverage after the reaction is reduced by 20-40 g/L, and the content of fructooligosaccharide is increased by 10-30 g/L compared with the sugar-containing beverage before the reaction. In the present disclosure, the fructooligosaccharide can be kestose and nystose.

In the present disclosure, the sugar degradation rate in the sugar-containing beverage after the reaction can be 20%-35%. In the present disclosure, the sugar degradation rate is based on the total amount of sucrose, glucose and fructose.

In the present disclosure, the sucrose degradation rate in the sugar-containing beverage after the reaction can be 80%-100%; preferably, the sucrose degradation rate can be 95%-100%.

In the present disclosure, the sugar-containing beverage can be a fruit and vegetable juice.

In the present disclosure, the immobilized fructosyltransferase can be obtained by immobilizing fructosyltransferase from *Aspergillus oryzae* ABCIS112 with the preservation number of CGMCC No.40524.

In some preferred embodiments of the present disclosure, the method comprises the steps of contacting fruit and vegetable juice with immobilized fructosyltransferase for reaction; wherein, the immobilized fructosyltransferase is obtained by immobilizing fructosyltransferase from *Aspergillus oryzae* ABCIS112 with the preservation number of CGMCC No.40524.

In the present disclosure, the content of the immobilized fructosyltransferase can be 1% to 20% (w/v), for example, 1% (w/v), 3% (w/v), 5% (w/v), 10% (w/v), or 20% (w/v), and the content of the immobilized fructosyltransferase is preferably 3%-10% (w/v).

In the present disclosure, preferably, enzymes exhibit higher activity when the reaction is carried out within a pH range of 3 to 7.

In the present disclosure, the reaction temperature can be 20-40°C, for example 25°C.

In the present disclosure, the reaction time can be 1-3 h, for example 1 h, 1.5 h or 2 h.

In some preferred embodiments of the present disclosure, the reaction temperature is 25°C, and the reaction time is 1-2 h.

In the present disclosure, preferably, the reaction is carried out under continuous vibration conditions, which allows the immobilized fructosyltransferase to fully contact the substrate sucrose in the fruit and vegetable juice. For example, the catalytic reaction is carried out in a shaker, and the rotational speed of the shaker is preferably 50-200 rpm, for example 150 rpm.

In some preferred embodiments of the present disclosure, the reaction is carried out under continuous vibration conditions, for example, in a shaker; the reaction temperature is 25°C, the reaction time is 1-2 h, and the rotational speed of the shaker is 150 rpm.

In some preferred embodiments of the present disclosure, when the content of the immobilized fructosyltransferase is 1%-20%, the reaction temperature is 20-40°C, and the reaction time is 1-2 h, the sugar degradation rate of the fruit and vegetable juice is 20%-35%.

In some preferred embodiments of the present disclosure, when the content of the immobilized fructosyltransferase is 10%, the reaction temperature is 25°C, and the reaction time is 1 h, the sugar degradation rate in the fruit and vegetable juice is 20%-30%, and the sucrose degradation rate is 80%-100%.

In some preferred embodiments of the present disclosure, when the content of the immobilized fructosyltransferase is 10%, the reaction temperature is 25°C, and the reaction time is 1.5 h, the sugar degradation rate in the fruit and vegetable juice is 25%-35%, and the sucrose degradation rate is 90%-100%.

In the present disclosure, preferably, the fruit and vegetable juice is pure fruit juice, such as orange juice, apple juice, pear juice, peach juice, mango juice, or grape juice; or the fruit and vegetable juice is pure vegetable juice, such as carrot juice or tomato juice; or the fruit and vegetable juice is a mixed fruit and vegetable juice, such as hawthorn and carrot juice. In the present disclosure, the pure fruit juice refers to juice prepared from fruits, which can be either original juice or concentrated juice; the pure vegetable juice refers to juice prepared from vegetables, which can be either original vegetable juice or concentrated vegetable juice.

The fourth aspect of the present disclosure provides a low-sugar beverage, which is prepared by the above method.

In the present disclosure, the low-sugar beverage can be a low-sugar fruit and vegetable juice, and the low-sugar fruit and vegetable juice is preferably low-sugar orange juice.

Based on common knowledge in this field, the above conditions can be combined in any manner to obtain various preferred embodiments of the present disclosure.

The reagents and raw materials used in the present disclosure are commercially available.

The positive advancement effect of the present disclosure lies in:

In this disclosure, immobilized fructosyltransferase can be repeatedly used for over 150 batches during the sugar reduction process of sugar-containing beverage. The sucrose in the sugar-containing beverage is completely converted into fructooligosaccharide, effectively reducing the sugar content in the beverage. The resulting fructooligosaccharide can promote digestion, while significantly lowering the cost of enzyme usage, which is beneficial for the large-scale production of low-sugar beverage.

### BIOMATERIAL PRESERVATION INFORMATION

The *Aspergillus oryzae* strain ABCIS112 of the present disclosure was preserved on March 14, 2023, at the General Microorganism Center of the China General Microbiological Culture Collection Center (CGMCC). Preservation address: No. 3, Courtyard 1, Beichen West Road, Chaoyang District, Beijing, Postal code: 100101. Preservation number: CGMCC No. 40524. Culture name: ABCIS112. Taxonomic name: *Aspergillus oryzae.*

### DETAILED DESCRIPTION OF THE PREFERRED EMBODIMENT

The following examples further illustrate the present disclosure, but the present disclosure is not limited thereto. The experimental methods for which specific conditions are not specified in the following examples are selected according to the conventional methods and conditions, or according to the commercial instructions.

### Example 1 Preparation of fructosyltransferase enzyme solution

*Aspergillus oryzae* ABCIS112 (preservation number: CGMCC No.40524) was inoculated in PDA solid medium and cultured at 30 °C for 5 days; then activated *Aspergillus oryzae* ABCIS112 blocks with a size of 1 cm × 1 cm were cut and inoculated into fermentation medium, and fermented and cultured at 30 °C and 200 rpm for 5 days. The fermentation broth was centrifuged at 3000 rpm to obtain the supernatant, which was the fructosyltransferase enzyme solution.

PDA solid medium: potato 20%, glucose 2%, agar 2%.

Fermentation medium: maltose 12%; corn steep liquor 1%; (NH₄)₂SO₄ 0.5%; KH₂PO₄ 0.35%; K₂HPO₄ 0.75%; MgSO₄·7H₂O 0.03%.

### Example 2 Immobilized fructosyltransferase

The fructosyltransferase solution obtained in Example 1 was added to 2.5% (g/mL) sodium alginate aqueous solution at the volume ratio of 1:10, and stirred evenly. The bubbles in the mixed solution were removed by standing or ultrasonic. Using a 50 mL syringe with a needle and a LongerPump device, the above mixed solution was added dropwise to 3 times the volume of 4% (g/mL) CaCl₂ solution while stirring the immobilized beads in the CaCl₂ solution using a small air pump or periodically so that the beads were fully contacted with the CaCl₂ solution, left overnight at 4 °C, and filtered to obtain the immobilized fructosyltransferase.

### Example 3 Determination of pH range for use of immobilized fructosyltransferase

The immobilized fructosyltransferase described in Example 2 was placed in reaction systems with different pH values (adjusted by acetate buffer) and its enzyme activity was measured. The measurement results were shown in Table 1 below.

The fructosyltransferase activity was determined according to the national standard GB/T 23528-2009 fructooligosaccharide. The basic method was as follows: adding enzyme solutions with different dilutions into 100 g/L sucrose solution (dissolved in 0.2 mol/L acetic acid buffer), oscillating at 45°C for 60 min, and standing in boiling water bath for 10 min to terminate the reaction; the supernatant was centrifuged and glycogene analysis was conducted by HPLC.

The enzymatic activity of fructosyltransferase was defined as 1 unit of enzyme activity is based on the fact that the kestose produced in the system after enzymatic reaction does not exceed 10% of the total sugar content, the amount of enzyme required to produce 1 µmol of kestose per minute under the above reaction conditions. The results showed that the immobilized fructosyltransferase had higher enzyme activity in the range of pH 3-7.

**Table 1 Determination of pH value of immobilized fructosyltransferase**

| Reaction Conditions | Enzyme Activity U/g |
|---|---|
| pH 7 | 91.2 |
| pH 6 | 104.6 |
| pH 5 | 112.1 |
| pH 4 | 127.3 |
| pH 3 | 115.1 |
| pH 2 | 4.6 |

### Example 4 Application of immobilized fructosyltransferase in sugar reduction of orange juice

The immobilized fructosyltransferase described in Example 2 was added to 100 mL of orange juice according to the enzyme concentration (mass-volume ratio of enzyme to fruit juice, g/mL) in Table 2, and the reaction was shaken for 2 hours at 25 °C and a shaker speed of 150 rpm, and the change of sucrose concentration in orange juice was detected by HPLC. The results were shown in Table 2 below. Among them, the sucrose content in orange juice without enzyme treatment was regarded as 100%. When the content of immobilized fructosyltransferase was 10%, the sucrose was completely degraded after 2 h of reaction.

**Table 2 Changes of sucrose in orange juice treated with immobilized fructosyltransferase**

| Enzyme Concentration | Degradation Rate of Sucrose After 1 h | Degradation Rate of Sucrose After 2 h |
|---|---|---|
| 0.5% | 33.49% | 53.99% |
| 1% | 45.39% | 68.53% |
| 3% | 60.90% | 74.32% |
| 5% | 74.28% | 81.36% |
| 10% | 88.56% | 100% |
| 20% | 97.27% | 100% |

### Example 5 Application of immobilized fructosyltransferase in reducing sugar content in pear juice

The immobilized fructosyltransferase described in Example 2 was added to 100 mL of pear juice according to the enzyme concentration (mass-volume ratio of enzyme to fruit juice, g/mL) in Table 3, and the reaction was shaken at 25 °C and the rotation speed of the shaker was 150 rpm for 2 h. The changes in sucrose concentration in pear juice were detected by HPLC. The results were shown in Table 3 below. Among them, the sucrose content in pear juice without enzyme treatment was regarded as 100%. When the concentration of immobilized fructosyltransferase was 5%, the sucrose was completely degraded after 2 h of reaction.

**Table 3 Changes of sucrose in pear juice treated with immobilized fructosyltransferase**

| Enzyme Concentration | Degradation Rate of Sucrose After 1 h | Degradation Rate of Sucrose After 2 h |
|---|---|---|
| 0.5% | 45.87% | 63.43% |
| 1% | 59.85% | 78.35% |
| 3% | 71.90% | 90.12% |
| 5% | 84.28% | 100% |
| 10% | 95.32% | 100% |
| 20% | 97.16% | 100% |

### Example 6 Application of immobilized fructosyltransferase in reducing sugar content in apple juice

The immobilized fructosyltransferase described in Example 2 was added to 100 mL of apple juice according to the enzyme concentration (mass-volume ratio of enzyme to fruit juice, g/mL) in Table 4, and the reaction was shaken at 25 °C for 2 hours at a shaker speed of 150 rpm. The changes in sucrose concentration in apple juice were detected by HPLC. The results were shown in Table 4 below. Among them, the sucrose content in apple juice without enzyme treatment was regarded as 100%. When the concentration of immobilized fructosyltransferase was 5%, the sucrose was completely degraded after 2 h of reaction.

**Table 4 Changes of sucrose in apple juice treated with immobilized fructosyltransferase**

| Enzyme Concentration | Degradation Rate of Sucrose After 1 h | Degradation Rate of Sucrose After 2 h |
|---|---|---|
| 0.5% | 24.79% | 45.28% |
| 1% | 35.88% | 55.32% |
| 3% | 42.56% | 72.59% |
| 5% | 68.34% | 100% |
| 10% | 90.23% | 100% |
| 20% | 98.58% | 100% |

### Example 7 Application of immobilized fructosyltransferase in reducing sugar content in mango juice

The immobilized fructosyltransferase described in Example 2 was added to 100 mL of mango juice according to the enzyme concentration (mass-volume ratio of enzyme to fruit juice, g/mL) in Table 5, and the reaction was shaken for 2 h at 25 °C and a shaker speed of 150 rpm. The changes in sucrose concentration in mango juice were detected by HPLC. The results were shown in Table 5 below. Among them, the sucrose content in mango juice without enzyme treatment was regarded as 100%. When the concentration of immobilized fructosyltransferase was 5%, the sucrose was completely degraded after 1 h of reaction.

**Table 5 Changes of sucrose in mango juice treated with immobilized fructosyltransferase**

| Enzyme Concentration | Degradation Rate of Sucrose After 1 h | Degradation Rate of Sucrose After 2 h |
|---|---|---|
| 0.5% | 38.27% | 55.45% |
| 1% | 53.79% | 78.94% |
| 3% | 82.48% | 95.16% |
| 5% | 100% | 100% |
| 10% | 100% | 100% |
| 20% | 100% | 100% |

### Example 8 Application of immobilized fructosyltransferase in reducing sugar content in grape juice

The immobilized fructosyltransferase described in Example 2 was added to 100 mL of grape juice at the enzyme concentration (mass-volume ratio of enzyme to fruit juice, g/mL) in Table 6, and the reaction was shaken for 2 h at 25 °C and a shaker speed of 150 rpm. The changes in sucrose concentration in grape juice were detected by HPLC. The results were shown in Table 6 below. Among them, the sucrose content in grape juice without enzyme treatment was regarded as 100%. When the concentration of immobilized fructosyltransferase was 10%, the sucrose was completely degraded after 2 h of reaction.

**Table 6 Changes of sucrose in grape juice treated with immobilized fructosyltransferase**

| Enzyme Concentration | Degradation Rate of Sucrose After 1 h | Degradation Rate of Sucrose After 2 h |
|---|---|---|
| 0.5% | 28.36% | 45.74% |
| 1% | 44.38% | 58.35% |
| 3% | 52.11% | 63.22% |
| 5% | 64.28% | 78.55% |
| 10% | 85.23% | 100% |
| 20% | 97.18% | 100% |

### Example 9 Application of immobilized fructosyltransferase in reducing sugar content in peach juice

The immobilized fructosyltransferase described in Example 2 was added to 100 mL of peach juice according to the enzyme concentration (mass-volume ratio of enzyme to fruit juice, g/mL) in Table 7, and the reaction was shaken at 25 °C and the rotation speed of the shaker was 150 rpm for 2 h. The changes in sucrose concentration in peach juice were detected by HPLC. The results were shown in Table 7 below. Among them, the sucrose content in peach juice without enzyme treatment was regarded as 100%. When the concentration of immobilized fructosyltransferase was 3%, the sucrose was completely degraded after 2 h of reaction.

**Table 7 Changes of sucrose in peach juice treated with immobilized fructosyltransferase**

| Enzyme Concentration | Degradation Rate of Sucrose After 1 h | Degradation Rate of Sucrose After 2 h |
|---|---|---|
| 0.5% | 50.46% | 75.47% |
| 1% | 65.58% | 86.53% |
| 3% | 80.36% | 100% |
| 5% | 100% | 100% |
| 10% | 100% | 100% |
| 20% | 100% | 100% |

### Example 10 Reuse of immobilized fructosyltransferase

The immobilized fructosyltransferase described in Example 2 was added to 100 mL of orange juice at a concentration of 10% (mass-volume ratio of enzyme to fruit juice, g/mL), and the reaction was shaken at 25 °C and 150 rpm for 2 hours, the immobilized enzyme was separated from the orange juice, and the sucrose content in the orange juice after the reaction was determined by HPLC. The separated immobilized enzyme was added to new 100 mL of orange juice again and reacted for 2 h using the same method to separate the immobilized enzyme from the orange juice, and the sucrose content in the orange juice was determined. Repeat the above steps.

The experimental results shown in Table 8 showed that the immobilized fructosyltransferase can be reused for more than 140 batches, and the sucrose in orange juice can be completely degraded, and the sucrose degradation rate can still reach 98% after being reused for 150 times.

**Table 8 Results of repeated application experiments of immobilized fructosyltransferase**

| Number of Applications (times) | Degradation Rate of Sucrose (%) |
|---|---|
| 30 | 100 |
| 60 | 100 |
| 90 | 100 |
| 120 | 100 |
| 140 | 100 |
| 150 | 98 |

### Example 11 Preparation of low-sugar orange juice

The immobilized fructosyltransferase described in Example 2 was added to three batches of orange juice in an amount of 10% of the enzyme concentration (mass-volume ratio of enzyme to fruit juice, g/mL), and the contents of fructose, glucose and sucrose in different batches of orange juice were different, and the content of each component was shown in Table 9-1 below. The contents of fructose, glucose, sucrose and fructooligosaccharide (sugarcane triose and sugarcane tetraose) in orange juice were detected after treatment with immobilized fructosyltransferase at 25 °C and the shaker speed of 150 rpm for 1 h and 1.5 h, respectively. The HPLC detection results were shown in Tables 9-2 and 9-4 below. The sucrose in the three batches of orange juice was obviously degraded, and the degradation effects of sucrose reached about 82.47%-91.25% and 92.41%-97.80% after treatment with immobilized fructosyltransferase for 1 h and 1.5 h, respectively, and the highest degradation rate after 1.5 h reached 97.80%; the degradation rate of sugar (based on the total amount of fructose, glucose and sucrose) after enzyme treatment for1 h and 1.5 h was 22.51%-28.71% and 27.49%-30.29% respectively. In addition, fructooligosaccharide (kestose and nystose) were newly added to orange juice. After 1 h and 1.5 h treatment, the content of fructooligosaccharide was 15.97-18.76 g/L, 19.56-21.36 g/L, respectively, accounting for more than 24% of the total sugar content, and the highest could reach 31.39%.

**Table 9-1 Detection of fructose, sucrose and glucose content in 3 batches of orange juice**

| Batch of Juice | Fructose Content (g/L) | Glucose Content (g/L) | Sucrose Content (g/L) |
|---|---|---|---|
| 1 | 21.45 | 15.68 | 27.31 |
| 2 | 21.23 | 20.86 | 32.29 |
| 3 | 17.32 | 14.30 | 30.51 |

**Table 9-2 Changes in sugar types and content of 3 batches of orange juice treated with immobilized fructosyltransferase for 1 h**

| Batch of Juice | Repeat | Fructose Content (g/L) | Glucose Content (g/L) | Sucrose Content (g/L) | Fructooligosaccharide Content (g/L) | Sugar Degradatio n rate | Sucrose Degradati on Rate |
|---|---|---|---|---|---|---|---|
| 1 | 1-1 | 21.93 | 23.81 | 2.89 | 17.66 | 24.53% | 89.42% |
| | 1-2 | 21.74 | 22.62 | 3.43 | 15.97 | 25.84% | 87.44% |
| | 1-3 | 21.52 | 21.47 | 2.95 | 17.12 | 28.71% | 89.20% |
| 2 | 2-1 | 20.53 | 27.10 | 5.66 | 18.76 | 28.35% | 82.47% |
| | 2-2 | 20.57 | 30.12 | 4.90 | 18.01 | 25.26% | 84.83% |
| | 2-3 | 20.66 | 29.88 | 4.99 | 17.98 | 25.34% | 84.55% |
| 3 | 3-1 | 16.26 | 25.27 | 3.11 | 17.9 | 23.51% | 89.81% |
| | 3-2 | 17.00 | 25.72 | 2.67 | 16.71 | 22.51% | 91.25% |
| | 3-3 | 16.83 | 26.21 | 2.72 | 17.17 | 26.35% | 91.08% |

**Table 9-3 Percentage of each component in total sugar after 3 batches of orange juice treated with immobilized fructosyl transfer for 1 h**

| Batch of Juice | Repeat | Fructose Proportion | Glucose Proportion | Sucrose Proportion | Percentage of Fructooligosaccharide in Total Sugar |
|---|---|---|---|---|---|
| 1 | 1-1 | 33.08% | 35.92% | 4.36% | 26.64% |
| | 1-2 | 34.10% | 35.48% | 5.38% | 25.05% |
| | 1-3 | 34.13% | 34.05% | 4.68% | 27.15% |
| 2 | 2-1 | 28.49% | 37.61% | 7.86% | 26.04% |
| | 2-2 | 27.95% | 40.92% | 6.66% | 24.47% |
| | 2-3 | 28.11% | 40.65% | 6.79% | 24.46% |
| | 3-1 | 26.00% | 40.41% | 4.97% | 28.62% |
| 3 | 3-2 | 27.38% | 41.42% | 4.30% | 26.91% |
| | 3-3 | 26.74% | 41.65% | 4.32% | 27.28% |

**Table 9-4 Changes in sugar types and contents of 3 batches of orange juice treated with immobilized fructosyltransferase for 1.5 h**

| Batch of Juice | Repea t | Fructos e Content (g/L) | Glucose Content (g/L) | Sucrose Content (g/L) | Fructooligosaccharide Content (g/L) | Sugar Degradation rate | Sucrose Degradation rate |
|---|---|---|---|---|---|---|---|
| 1 | 1-1 | 21.73 | 23.51 | 0.89 | 20.46 | 28.41% | 96.74% |
| | 1-2 | 21.87 | 23.72 | 1.02 | 20.23 | 27.67% | 96.27% |
| | 1-3 | 21.32 | 22.86 | 0.95 | 20.62 | 29.97% | 96.52% |
| 2 | 2-1 | 20.53 | 28.87 | 2.45 | 21.36 | 30.29% | 92.41 % |
| | 2-2 | 20.57 | 31.12 | 2.24 | 20.47 | 27.49% | 93.06% |
| | 2-3 | 20.66 | 30.88 | 2.09 | 20.21 | 27.90% | 93.53% |
| 3 | 3-1 | 16.26 | 26.37 | 0.78 | 19.56 | 30.13% | 97.44% |
| | 3-2 | 17 | 26.45 | 0.67 | 20.19 | 28.99% | 97.80% |
| | 3-3 | 16.83 | 26.97 | 1.12 | 20.10 | 27.70% | 96.33% |

**Table 9-5 Percentage of each component in total sugar after 3 batches of orange juice treated with immobilized fructosyltransferase for 1.5 h**

| Batch of Juice | Repea t | Fructose Proportion | Glucose Proportion | Sucrose Proportion | Percentage of Fructooligosaccharide in Total Sugar |
|---|---|---|---|---|---|
| 1 | 1-1 | 32.63% | 35.31% | 1.34% | 30.73% |
| | 1-2 | 32.72% | 35.49% | 1.53% | 30.27% |
| | 1-3 | 32.43% | 34.77% | 1.44% | 31.36% |
| 2 | 2-1 | 28.04% | 39.43% | 3.35% | 29.18% |
| | 2-2 | 27.65% | 41.83% | 3.01% | 27.51% |
| | 2-3 | 27.98% | 41.82% | 2.83% | 27.37% |
| | 3-1 | 25.82% | 41.88% | 1.24% | 31.06% |
| 3 | 3-2 | 26.43% | 41.13% | 1.04% | 31.39% |
| | 3-3 | 25.88% | 41.48% | 1.72% | 30.91% |

According to the analysis of data results, it was found that the total content of fructooligosaccharide (kestose and nystose) in low-sugar orange juice after treatment for 1 h and 1.5 h could reach 15.97-21.36 g/L. Fructooligosaccharide belongs to soluble dietary fiber (SDF); therefore, the soluble dietary fiber content in the processed orange juice was at least 15.97 g/L.

Although the above describes specific embodiments of the present disclosure, those skilled in the art should understand that these are merely illustrative examples, and various changes or modifications can be made to these embodiments without departing from the principles and essence of the invention. Therefore, the scope of protection of the present disclosure is defined by the appended claims.

## Claims

1. A low-sugar fruit and vegetable juice, comprising: fructose, glucose, sucrose and a dietary fiber; wherein
the dietary fiber is preferably a fructooligosaccharide; and the fructooligosaccharide is preferably kestose and/or nystose.

2. The low-sugar fruit and vegetable juice according to claim 1, wherein the content of fructose is 15-25 g/L, the content of glucose is 20-35 g/L, the content of sucrose is 0-6 g/L, and the content of fructooligosaccharide is 15-25 g/L;
preferably, the content of fructose is 15-25 g/L, the content of glucose is 20-35 g/L, the content of sucrose is 0-2 g/L, and the content of fructooligosaccharide is 19-22 g/L.

3. The low-sugar fruit and vegetable juice according to claim 1 or 2, wherein the content of fructose is 20%-40% of the total sugar content, the content of glucose is 30%-45% of the total sugar content, the content of sucrose is 0-10% of the total sugar content, and the content of fructooligosaccharide is 20%-40% of the total sugar content;
preferably, the content of fructose is 20%-40% of the total sugar content, the content of glucose is 35%-45% of the total sugar content, the content of sucrose is 0-2% of the total sugar content, and the content of fructooligosaccharide is 25%-40% of the total sugar content;
wherein the total amount of fructose, glucose, sucrose and fructooligosaccharide is considered as 100%.

4. The low-sugar fruit and vegetable juice according to any one of claims 1 to 3, wherein the low-sugar fruit and vegetable juice is prepared from pure fruit juice, such as apple juice, pear juice, peach juice, mango juice or grape juice.

5. A low-sugar orange juice, comprising: fructose, glucose, sucrose and a dietary fiber;
wherein
the dietary fiber is preferably a fructooligosaccharide; and the fructooligosaccharide preferably is kestose and/or nystose.

6. The low-sugar orange juice according to claim 5, wherein the content of fructose is 15-25 g/L, the content of glucose is 20-35 g/L, the content of sucrose is 0-6 g/L, and the content of fructooligosaccharide is 15-25 g/L;
preferably, the content of fructose is 15-25 g/L, the content of glucose is 20-35 g/L, the content of sucrose is 0-2 g/L, and the content of fructooligosaccharide is 19-22 g/L.

7. The low-sugar orange juice according to claim 5 or 6, wherein the content of fructose is 20%-40% of the total sugar content, the content of glucose is 30%-45% of the total sugar content, the content of sucrose is 0-10% of the total sugar content, and the content of fructooligosaccharide is 20%-40% of the total sugar content;
preferably, the content of fructose is 20%-40% of the total sugar content, the content of glucose is 35%-45% of the total sugar content, the content of sucrose is 0-2% of the total sugar content, and the content of fructooligosaccharide is 25%-40% of the total sugar content;
wherein the total amount of fructose, glucose, sucrose and fructooligosaccharide is considered as 100%.

8. The low-sugar orange juice according to any one of claims 5 to 7, wherein the low-sugar orange juice is prepared from pure orange juice.

9. A method for reducing sugar content in a sugar-containing beverage, comprising: contacting the sugar-containing beverage with an immobilized fructosyltransferase to carry out a reaction; wherein the immobilized fructosyltransferase has the activity of reducing the sugar content in a sugar-containing beverage and converting sucrose into a fructooligosaccharide, thereby giving a beverage having a reduced sugar content and an increased content of fructooligosaccharide compared with the sugar-containing beverage.

10. The method according to claim 9, wherein the sucrose content of the sugar-containing beverage after the reaction is reduced by 20-40 g/L, and the content of fructooligosaccharide is increased by 10-30 g/L compared with the sugar-containing beverage before the reaction.

11. The method according to claim 9 or 10, wherein the sugar degradation rate in the sugar-containing beverage after the reaction is 20%-35%;
and/or, in the sugar-containing beverage after the reaction, the sucrose degradation rate is 80%-100%; preferably, the sucrose degradation rate is 95%-100%.

12. The method according to any one of claims 9 to 11, wherein the sugar-containing beverage is a fruit and vegetable juice;
and/or, the immobilized fructosyltransferase is obtained by immobilizing a fructosyltransferase from *Aspergillus oryzae* ABCIS112 with the preservation number of CGMCC No.40524.

13. The method according to any one of claims 9 to 12, wherein the content of the immobilized fructosyltransferase in the reaction is 1% to 20% (w/v), preferably 3% to 10% (w/v);
and/or, the pH of the reaction is 3-7;
and/or, the reaction temperature is 20-40°C and the reaction time is 1-3 h; preferably, the reaction temperature is 25°C and the reaction time is 1-2 h;
and/or, the reaction is carried out under vibration conditions; preferably, the vibration is in a shaker with a rotational speed of 50-200 rpm; more preferably, the rotational speed of the shaker is 150 rpm.

14. The method according to any one of claims 9 to 13, wherein when the content of the immobilized fructosyltransferase is 1%-20%, the reaction temperature is 20-40°C, and the reaction time is 1-2 h, the sugar degradation rate of the fruit and vegetable juice is 20%-35%;
preferably, when the content of the immobilized fructosyltransferase is 10%, the reaction temperature is 25°C, and the reaction time is 1 h, the sugar degradation rate in the fruit and vegetable juice is 20%-30%, and the sucrose degradation rate is 80%-100%; preferably, when the content of the immobilized fructosyltransferase is 10%, the reaction temperature is 25°C, and the reaction time is 1.5 h, the sugar degradation rate in the fruit and vegetable juice is 25%-35%, and the sucrose degradation rate is 90%-100%;
preferably, the fruit and vegetable juice is pure fruit juice, such as orange juice, apple juice, pear juice, peach juice, mango juice, or grape juice;
or the fruit and vegetable juice is pure vegetable juice, such as carrot juice or tomato juice;
or the fruit and vegetable juice is a mixed fruit and vegetable juice, such as hawthorn and carrot juice.

15. A low-sugar beverage, prepared by the method according to any one of claims 9 to 14; wherein the low-sugar beverage is preferably low-sugar fruit and vegetable juice; and the low-sugar fruit and vegetable juice is preferably low-sugar orange juice.
